# EUROPEAN PATENT SPECIFICATION

(11) **EP 3 417 679 B1**
(45) Date of publication and mention of the grant of the patent: **07.04.2021**
(21) Application number: 17705171.1
(22) Date of filing: 01.02.2017
(51) Int. Cl.: H05B 47/19

(54) **SECURE NETWORK COMMISSIONING FOR LIGHTING SYSTEMS**
INBETRIEBNAHME EINES SICHEREN NETZWERKS FÜR BELEUCHTUNGSSYSTEME
MISE EN SERVICE DE RÉSEAU SÉCURISÉ POUR SYSTÈMES D'ÉCLAIRAGE

(30) Priority: 16.02.2016 US 201662295836 P
(43) Date of publication of application: 26.12.2018
(73) Proprietor: Zumtobel Lighting Inc., Highland, New York 12528-2630 (US)
(72) Inventor: JONSSON, Karl, Rancho Santa Margarita, California 92688 (US); ZEHLER, Jeffrey, El Dorado Hills, California 95762 (US)
(74) Representative: Rupp, Christian
(86) International application number: PCT/IB2017/050522
(87) International publication number: WO 2017/141127

(56) References cited:
- EP-A1- 2 706 821
- WO-A1-2011/045576
- WO-A2-2009/031112
- DE-A1-102008 056 164
- DE-A1-102014 102 678
- US-A1- 2015 173 154
- US-A1- 2015 366 035
- US-A1- 2016 037 614

## Description

The invention is related to a network-capable infrastructure device according to independent claim 1, a method of commissioning a secure lighting network according to independent claim 4, a system comprising a network-capable infrastructure device according to independent claim 6 and a method for commissioning at least one network-capable infrastructure device according to independent claim 8. Preferred embodiments are set out in the dependent claims.

For commissioning the lighting system according to the invention key information for secure communication between devices of the lighting system is provided to the individual infrastructure devices. The invention further regards such a network-capable infrastructure device for use in the lighting system, a method for commissioning a secure lighting network, a commissioning device and a network for commissioning a network-capable infrastructure device.

Temporary lighting systems, particularly in buildings, can include a large number of elementary units such as lighting units, lighting control units, switches, dimming units, sensor units such as occupancy sensors, ballasts for driving lighting units, communication units such as interfaces to other building systems like HVAC, fire alarm. Often the individual units are furnished with a communication capability and require extensive configuration in order to put the physically installed lighting system into service. The process of commissioning the lighting system may include basic tasks of identifying an installed device, determining a location of the identified device and providing a network address to the identified device. If the lighting system, which stands as an example for other building infrastructure systems, includes a large number of infrastructure devices as its elements, the process of commissioning is cumbersome, requires time and involves significant resources.

The process of commissioning becomes even more complex if the lighting system requires secure communication between its infrastructure devices. The commissioning process then requires to provide key information for a secure exchange of information between the devices constituting the lighting system. The key information is a short piece of information which serves to encode/decode or authenticate a message between one or more infrastructure devices, for example to confirm that a message comes from the stated sender (authenticity) as well as that its message content has not been changed during transit (integrity). However, during commissioning of the lighting system the distribution of key information itself has to be managed such that the key information is not to be intercepted or manipulated.

Several wireless or wired networking stacks allow performing a secure commissioning process. As an example, the Thread network protocol is an internet protocol based (IPv6-) protocol for smart infrastructure devices to communicate over a network. Other examples of such protocols include ZigBee and Bluetooth Smart.

The Thread network protocol is based on an IEEE Standard 802.15.4 wireless protocol with a mesh communication structure and employs 6LoWPAN. 6LoWPAN is an acronym of IPv6 over Low Power Wireless Personal Area Networks. 6LoWPAN defines encapsulation and header compression mechanisms that allow IPv6 packets to be sent and received over IEEE 802.15.4 based networks.

Thread in particular may support a number of devices ranging up to 250 in an IP-addressable network with cloud access and employs AES encryption (Advanced Encryption Standard).

Document "Thread Commissioning", edition 2.0, July 13, 2015, published by the Thread Group Inc. as a technical white paper discloses under the term "commissioning" a process in which a user adds a new device onto a thread network. The disclosed mechanism allows the device joining the network to announce its existence to and in the already existing thread network. A subset of incoming commands is admitted for the joining device in a non-secure network, whereby a full bi-directional communication capability for participation with functionality in the thread network requires secure confirmation of a user. However the existing commissioning process suffers from only supporting a limited device number of devices in a secure network. The commissioning process basing on the existing solutions is not feasible for secure commissioning of a lighting network comprising hundreds of infrastructure devices in a single building.

Even more severe exchange of information and in particular of key information is performed over the same communication network as the communication to be encrypted. Thus the risk of the key information being subject to eavesdropping and therefore compromising the subsequent allegedly secure communication becomes real.

US 2015/0173154 A1 discloses a network-capable infrastructure device having a second communication unit which is configured to communicate with a commissioning device by light.

DE 10 2014 102678 A1 discloses a network-capable infrastructure device having a second communication unit which is configured to communicate with a commissioning device by wireless radio, and having a first communication unit which is configured to communicate with at least one other infrastructure device based on pre-configured key information.

DE 10 2008 056164 A1 discloses a non-network-capable infrastructure device having a single communication unit which is configured to communicate with a commissioning device by light.

The invention addresses the technical problem of commissioning an infrastructure device in a lighting system into a secure lighting network in an efficient manner avoiding the disadvantages of the current solution.

The problem is solved by the system according to claim 6, the network-capable infrastructure device according to claim 1, the method for commissioning a secure lighting network according to claim 4 and the method for commissioning a network-capable infrastructure device according to claim 8.

By transferring the key information via the second communication unit and the commissioning communication unit, and performing the communication between the infrastructure devices via the first communication unit of the infrastructure devices, distinct communication links, in particular physically distinct communication interfaces for key transfer on one hand and secure communication on the other hand become possible. Intercepting the key information during transfer becomes improbable and thus secure key transfer during commissioning and secure communication in the lighting system afterwards is possible.

When the first communication unit communicates via wireless communication and the second communication unit employs communication by light and/or acoustic communication the interception probability for the key information is further reduced. Visual communication links such as a VLC communication link (Visible Light Communication) offer the advantage of a reduced and clearly restricted coverage area.

By the claimed system, a commissioner can easily browse through the detected and identified infrastructure device. The identified infrastructure devices, which are yet insecure "grey-listed" infrastructure devices, announce their presence via an intermittent identification signal, such as an indicator light, changing the light intensity, emitting a short sound signal. As the commands are one-way output signals, there is no significant time lag and a user may browse through hundreds of devices in a short amount of time and identify the infrastructure devices of specific interest, for example at a current location of the commissioning user. Once the infrastructure devices have been identified, the user may for example visually drag and drop an icon representing the infrastructure device of interest into a secure commissioning area. The infrastructure device, whose device representation (icon) has been shifted into the secure commissioning area, will now be automatically commissioned by the application in the background and without further requiring an action by the user. For example, the key information is transferred to the joining infrastructure device for enabling secure communication with the lighting system. The feature of tying the automated and secure commissioning process with visually or acoustically perceivable cues provides an efficient solution to the technical problem. The commissioner is not required to register a large number of infrastructure devices manually to allow the infrastructure devices onto the secure lighting network before starting the commissioning process. A risk of an error due to a bulk import of unique device identifiers is also reduced. The installation time for the lighting system is advantageously reduced.

Advantageously, the key information is a private key of the infrastructure device, and the infrastructure device receives the key information in a commissioning process of the infrastructure device.

The invention will be described in more detail with reference to the attached drawings.
- Figure 1: shows an overview of a lighting system and a commissioning device of an embodiment,
- Figure 2: provides a block diagram of a network-capable infrastructure device according to an embodiment,
- Figure 3: shows an exemplary screen display of user interface of a method for commissioning a secure lighting system according to an embodiment,
- Figure 4: provides a flowchart of a method for commissioning a network-capable infrastructure device according to an embodiment, and
- Figure 5: shows steps of a method for commissioning a network-capable infrastructure device according to an embodiment.

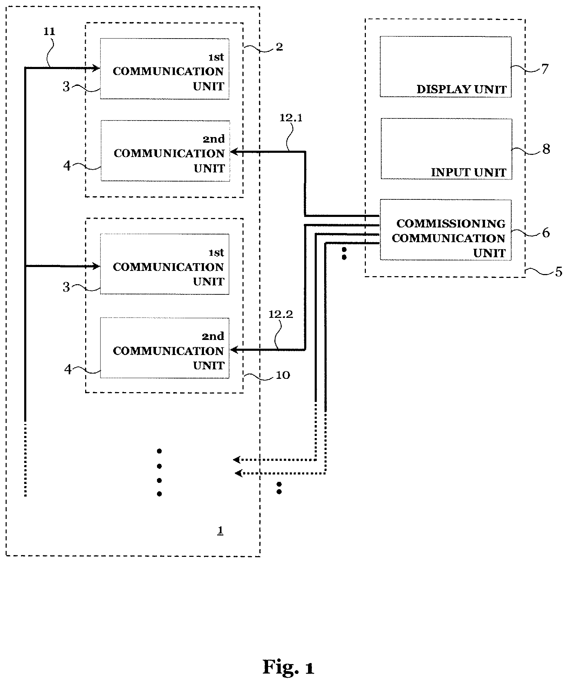

Fig. 1 shows an overview of a lighting system 1 and a commissioning device 5 of an embodiment of the invention.

In Fig. 1 a lighting system 1 according to an embodiment is shown in a simplified manner which regards in particular the communication means and the interaction of the respective communication means. The depicted infrastructure device 2 and the depicted other infrastructure device 10 represent individual elements of the lighting system 1, which is of course not limited to including only two infrastructure devices 2, 10. The lighting system 1 can comprise a large number of infrastructure devices 2, 10.

An infrastructure device 2 and the other infrastructure device 10 is for example a luminaire, a lighting device, a ballast device for driving light emitting means, an input means such as an On/Off switch, a dimming switch, any sensor such as a presence sensor, a fire alarm, any control means such as a central light control server or the like.

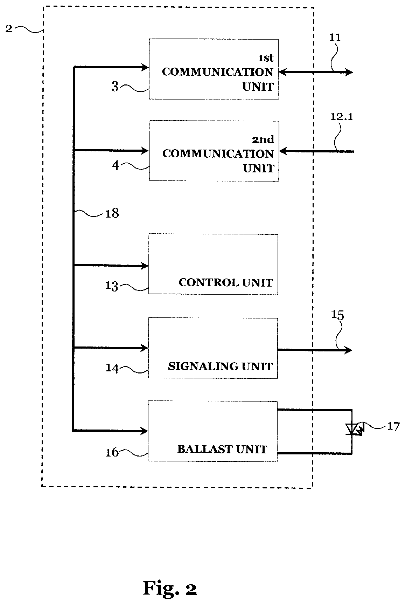

The infrastructure device 2 and the other infrastructure device 10 each include a first communication unit 3 and a second communication unit 4. Further aspects of the infrastructure device 2 beyond the first communication unit 3 and second communication unit 4 will be discussed with reference to Fig. 2 below.

The first communication unit 3 enables the infrastructure device 2 to communicate with at least one other infrastructure devices, 10 of the lighting system 1. The first communication unit 3 is preferably a wireless communication unit which is configured to operate based on at least one communication standard suitable for a home automation network such as Bluetooth, Bluetooth LE, Bluetooth Smart, ZigBee, xAP, DSI, DALI,....

The second communication unit 4 is a communication unit which enables communication according to another communication standard than the first communication unit 3. Particularly the second communication unit 4 is configured to enable communication with a communication counterpart such as a commissioning device 5 via a physically different communication channel or a physically different communication medium than the first communication unit 1. The second communication unit preferably communicates by means of optical signals or acoustical signals. The second communication unit 4 of a preferred embodiment uses visible light communication (VLC) for communication.

In fig. 1 the second communication unit 4 is shown to receive second communication signals 12.1, 12.2 only. However the second communication unit 4 can be adapted to transmit and to receive communication signals 12.1, 12.2.

In fig. 1 a commissioning device 5 is shown. The depicted commissioning device 5 includes a commissioning communication unit 6, a display unit 7 and an input unit 8.

The commissioning communication unit 6 is configured to communicate according to another communication standard than the first communication unit 3 of the infrastructure device 2. Particularly the commissioning communication unit 6 is configured to enable communication with the second communication unit 4 of an infrastructure device 2 as communication counterpart via a physically different communication channel or a physically different communication medium than the first communication unit 3. The commissioning communication unit 6 preferably communicates by means of optical signals or acoustical signals. In a preferred embodiment, the commissioning communication unit 6 is adapted to use VLC. In fig. 1 the commissioning communication unit 6 is shown to transmit second communication signals 12.1, 12.2 only. However the second communication unit 4 can be adapted to transmit and to receive communication signals 12.1, 12.2, thus working in a bidirectional manner.

The display unit 7 of the commissioning device 5 may be the display of a mobile computing unit. The display unit 7 may also integrate the function of the input unit 8 when being implemented by the touch sensitive display of a mobile computing device. The commissioning device 5 is advantageously a mobile computing device, a smart phone or a tablet computer with a particular commissioning software program running on a processing unit the mobile computing device. The commissioning software program is adapted to implement the functionalities required for commissioning the lighting system 1.

Figure 2 shows a block diagram of a network-capable infrastructure device 2 according to an embodiment.

The network capable infrastructure device 2 is adapted to operate in lighting system 1. For communicating by communication signals 11 with at least one other infrastructure device 10 in lighting system 1 (lighting network), the infrastructure device 2 comprises the first communication unit 3 which is already discussed above with reference to fig. 1. The network capable infrastructure device 2 includes further the second communication unit 4 which performs communication using a different communication standard than the first communication unit 3.

The infrastructure device 2 of a preferred embodiment further includes a signaling unit 14. The signaling unit 14 is adapted to emit an acoustically or optically perceivable signal 15. The signaling unit 14 of an embodiment controls a status LED of the infrastructure device 2 to emit a signal 15 in the shape of a light signal, for example an intermittent light signal or light flash.

The signaling unit 14 of an embodiment emits a signal 15 as an identification signal unambiguously identifying the infrastructure device 2, for example be emitting a signal 15 carrying a modulated identification information of the infrastructure device 2.

The signaling unit 14 of an embodiment controls a buzzer or beeper to emit an acoustic signal, for example a short beep.

The signaling unit 14 according to an embodiment controls a ballast unit 16 of the infrastructure device 2 to change a light intensity of a light emitting unit 17 to vary at least one light parameter of emitted light, for example a light intensity or a light color, in a distinguishable manner.

The exemplary infrastructure device 2 shown in fig. 2 is a ballast for driving lighting devices 17. The infrastructure device 2 includes a ballast unit 16 which provides a driving signal for driving the at least one light emitting unit 17. The at least one light emitting unit 17 preferably includes one or more light emitting diodes (LED, OLED) or gas discharge lamps for emitting light.

The first communication unit 3, the second communication unit 4, the signalling unit 14 and the ballast unit 16 a connected via internal communication means, for example an internal bus system 18. The internal bus system 18 connects a control unit 13 of the infrastructure device 2 with the other units of the infrastructure device 2. The control unit 12 performs controlling of an operation of the infrastructure device 2, the operation including the standard function of driving the light emitting unit 17 as well as the process of commissioning the infrastructure device 2.

In particular the control unit 13 may be implemented in form of a microcontroller which performs the method steps for performing commissioning of the infrastructure device 2 according to the invention.

Furthermore, the control unit 13 can be adapted to control at least one of the first communication unit 3 and the second communication unit 4 to transmit at least for predetermined time an identification signal. The identification signal is adapted to unambiguously identify the infrastructure device 2. The identification signal can be transmitted in response to a received request, regularly for a time interval at the predetermined time or even continuously.

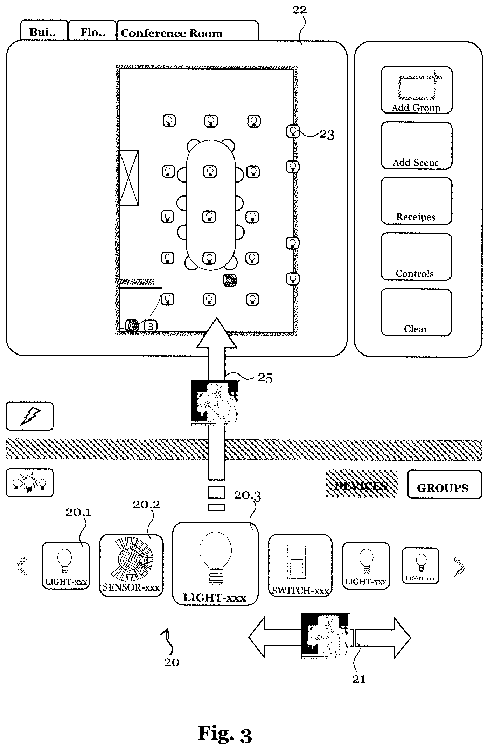

Fig. 3 shows an example for a screen display of a user interface of a method for commissioning a secure lighting system 1 according to an embodiment.

A commissioning method according to an embodiment of the invention is advantageously performed using an application software program running on a processor of an electronic device, for example a mobile computing device. The computing device further includes internally or externally connected at least the commissioning communication unit 6.

The screen display on display unit 7 is divided in multiple display areas. A first display area 20 displays a number of icons 20.1, 20.2, each icon representing a detected infrastructure device 2. For example, the first icon 20.1 represents a detected luminaire, the second icon 20.2 represents a detected presence sensor. A user may use the touch sensitive display unit to browse through the detected icons 20.1, 20.2 by a first input operation 21.

The icons 20.1, 20.2 which can be displayed in the first area 20 each represent a detected infrastructure device 2, however a key information is not yet shared with the corresponding infrastructure devices 2. The infrastructure devices 2 represented in the first area 20 are thus not trusted devices as secure communication with them via the respective first communication means 3 is not yet possible. As the infrastructure devices 2 share no key information with the lighting network, they are thus only allowed restricted device functionalities in the lighting system 1. In particular, the infrastructure devices 2 represented in the first area 20 are thus denied any authority towards the lighting network. The infrastructure devices 2 represented in the first area 20 may be considered as being blind to the lighting network.

The user browses through the icons 20.1, 20.3, 20.3 using a first operation input 21 shifting the icons 20.1, 20.3, 20.3 in a horizontal direction. When, for example, placing the icon 20.3 at the centermost position in the first area 20, the corresponding infrastructure device 2 is controlled to emit a visually or acoustically perceivable signal. Thus a user is enabled to identify the corresponding infrastructure device 2 out of a plurality of infrastructure devices 2 positioned within the user's view.

The user can select an icon 20.1, 20.2, 20.3 with a second input 25 and move the icon 20.1, 20.2, 20.3 from the first area 20 into a second area 22 on the displayed screen.

The first input 21 and the second input 25 can be a "drag and drop" type operation performed on the touch-sensitive display of the display unit 7 of the commissioning device 5.

In fig. 3 the second input 25 is performed on icon 20.3 on the centermost position in the first area 20. By selecting icon 20.3 and shifting it to the second area 22, infrastructure device 2 corresponding to the icon 20.3 is selected to be subject to a commissioning process. The commissioning process will be run advantageously in the background of the commissioning software program. The commissioning process running in the background of the commissioning software program includes providing the key information to the infrastructure device 2 via the communication signal 11.1, 11.2 between the commissioning communication unit 6 and the second communication unit 4.

When the commissioning process has been successfully finished, the infrastructure device 2 shares the key information with the lighting system 1. Thus the infrastructure device 2 is a confirmed and now a trusted resource in the lighting system 1 and may perform its assigned functions to a full extent.

The commissioning process as discussed with reference to fig. 3 enables a user to control commissioning in comfortable and effective manner by browsing with a first input 21 through infrastructure devices 2 represented in the first area 20. The infrastructure devices 2 in the first area 20 may be termed grey-listed infrastructure devices 2, as only restricted functionalities are allowed for the infrastructure devices 2 represented in the first area 20. The infrastructure devices 2 in the second area 22 may be termed white-listed infrastructure devices 2, as full and unrestricted functionalities are allowed for the infrastructure devices 2 represented in the second area 22.

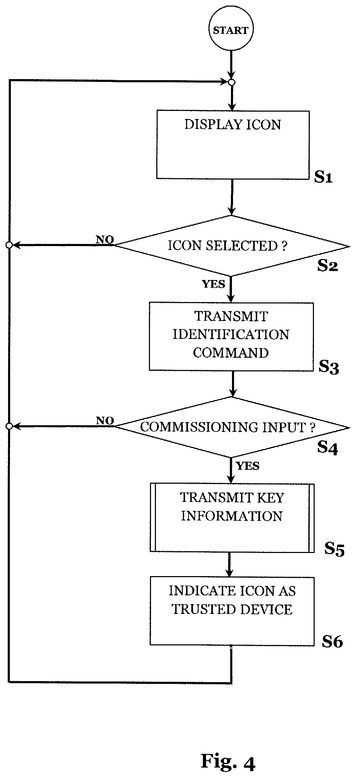

Fig.4 provides a flowchart of a method for commissioning a network-capable infrastructure device 2 according to an embodiment.

The method for commissioning at least one network-capable infrastructure device 2 using a commissioning device 5 starts with a step of displaying an icon 20.1, 20.2, 20.3 representing the at least one infrastructure device 2 on a display unit 7 of the commissioning device 5.

In succeeding step S2 the displayed infrastructure device 2 is selected with a first input 21. After selecting the infrastructure device 2 in the step S2, the method proceeds to step S3. In step S3, the commissioning communication unit 6 of the commissioning device 5 automatically and in response to the selection operation transmits a command to the infrastructure device 2 to identify itself visually or acoustically.

In step S4 succeeding to the step S3 it is determined, if a second input 25 is performed by the input unit 8. If the input unit 8 determines a respective second input 25 with respect to the infrastructure device 2, the method proceeds to step S5

In step S5 the commissioning communication unit 6 transmits key information to the selected infrastructure device 2 after having receiving a respective second input 25 in step S4.

In step S6 succeeding to the step S5, the display unit 7 proceeds to displaying a screen in which the displayed icon is marked as a trusted infrastructure device 2 due to successfully transmitting the key information to the infrastructure device 2.

If in step S2 no first input 21 to the displayed icon 20.1, 20.2, 20.3 is detected, the method returns to step S1 of displaying an icon 20.1, 20.2, 20.3 without further action.

If in step S4 no second input 25 meaning a commissioning request operation on the displayed icon 20.1, 20.2, 20.3 is detected, the method returns to step S1 of displaying the icon 20.1, 20.2, 20.3 without further action.

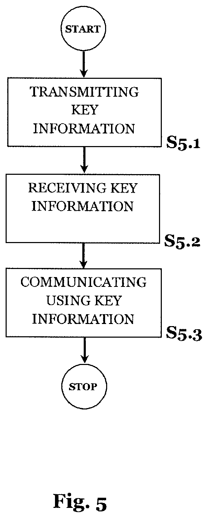

In fig. 5, the step S5 of transmitting key information in a method for commissioning a network-capable infrastructure device 2 according to an embodiment is shown in more detail.

In a step S5.1, the commissioning device 5 transmits via a commissioning communication unit 6 the key information to the infrastructure device 2. In particular the commissioning communication unit 6 transmits a commissioning signal 12.1, 12.2 comprising the key information to the second communication unit 4 of the infrastructure device to be commissioned.

The infrastructure device 2 receives by the second communication unit 4 the key information in the step S5.2.

After receiving the key information in step S5.2, the infrastructure device 2 communicates via the first communication unit 3 with at least one other infrastructure device 10 and its first communication unit 3 using the key information key information received in the step S5.2.

The invention is discussed with reference to a lighting system 1 and an infrastructure device 2 being a ballast. However, the claimed invention is also applicable for other infrastructure devices forming part of a lighting system 1 or general infrastructure system, such as a fire warning system.

## Claims

1. A network-capable infrastructure device (2), including
a first communication unit (3) configured to communicate with at least one other infrastructure device (10), and
a second communication unit (4) configured to communicate with a commissioning device (5), and
wherein the network-capable infrastructure device (2) is configured to receive a key information by the second communication unit (4), and to communicate with the at least one other infrastructure device (10) via the first communication unit (3) using the received key information,
wherein
the first communication unit (3) is configured to communicate by a wireless communication interface,
which is configured to operate based on at least one communication standard suitable for a home automation network such as Bluetooth, Bluetooth LE, Bluetooth Smart, ZigBee, xAP, DSI, DALI; **characterized in that** the second communication unit (4) is configured to communicate by acoustic communication.

2. The network-capable infrastructure device according to claim 1, wherein the network-capable infrastructure (2) is a ballast device for driving a lighting unit (17).

3. The network-capable infrastructure device according to any one of claims 1 or 2, wherein the key information is a private key of the network-capable infrastructure device (2), and the network-capable infrastructure device (2) is configured to receive the key information in a commissioning process of the network-capable infrastructure device (2, 10).

4. A method for commissioning a secure lighting network (1) of at least one network-capable infrastructure device (2) comprising a first (3) and a second communication unit (4), the method comprising steps of
a commissioning device (5) transmitting via a commissioning communication unit (6) key information to the at least one network-capable infrastructure device (2)(S5.1), and
the at least one network-capable infrastructure device (2) receiving by the second communication unit (4) the key information (S5.2), and
the at least one network-capable infrastructure device (2) communicating via the first communication unit (3) with at least one other infrastructure device (10) using the received key information (S5.3), wherein
the first communication unit (3) communicates by a wireless communication interface, which is configured to operate based on at least one communication standard suitable for a home automation network such as Bluetooth, Bluetooth LE, Bluetooth Smart, ZigBee, xAP, DSI, DALI; **characterized in that** the second communication unit (4) communicates by acoustic communication.

5. The method according to claim 4, wherein
the key information is a private key of the network-capable infrastructure device (2).

6. A system comprising a network-capable infrastructure device (2) according to any one of claims 1 to 3 and a commissioning device (5) for commissioning said network-capable infrastructure device (2), the commissioning device (5) including
a commissioning communication unit (6) configured to communicate with a second communication unit (4) of the infrastructure device (2),
a display unit (7) configured to display an icon representing the network-capable infrastructure device (2), and
an input unit (8) configured to accept an input operation to select the displayed network-capable infrastructure device (2), and
wherein the commissioning device is configured to transmit a command to the network-capable infrastructure device (2) when accepting the input operation, wherein the command instructs the network-capable infrastructure device (2) to emit an
acoustical signal, and
to transmit a key information automatically to the network-capable infrastructure device (2) when the input unit (8) receives a respective input operation, wherein
the commissioning communication unit (6) is configured to communicate with the second communication unit (4) by acoustic communication.

7. The system according to claim 6, wherein the commissioning device (5) is a mobile device or a commissioning application running on a mobile computing device.

8. A method for commissioning at least one network-capable infrastructure device (2) using a commissioning device (5), the method comprising steps of
displaying an icon representing the at least one network-capable infrastructure device (2) on a display unit (7) of the commissioning device (5) (S1),
selecting the displayed network-capable infrastructure device (2)(S2),
transmitting by a commissioning communication unit (6) of the commissioning device (5) automatically in response to the selection operation a command to the at least one network-capable infrastructure device (2) to identify itself acoustically when receiving a first input (S3),
the commissioning communication unit (6) transmitting a key information to the selected network-capable infrastructure device (2) when receiving a respective input operation (S5), wherein
the at least one network-capable infrastructure device (2) includes a first communication unit (3) for communicating with at least one other infrastructure device (10) and a second communication unit (4);
the commissioning communication unit (6) is configured to communicate with the second communication unit (4);
wherein the at least one network-capable infrastructure device (2) is configured to receive the key information via the second communication unit (4), and to communicate via the first communication unit (3) with the other infrastructure device (10) using the received key information, wherein
the first communication unit (3) is configured to communicate by a wireless communication interface suitable for a home automation network, which is configured to operate based on at least one communication standard suitable for a home automation network such as Bluetooth, Bluetooth LE, Bluetooth Smart, ZigBee, xAP, DSI, DALI; and
the second communication unit (4) is configured to communicate by acoustic communication.

9. The method according to claim 8, wherein
the display unit (7) indicates the displayed icon as a trusted network-capable infrastructure device (2) when successfully transmitting the key information to the selected network-capable infrastructure device (2) (S6).

10. The method according to claim 8, wherein
the first communication unit (3) is configured to receive the command.

11. The method according to claim 8, wherein
the key information is a private key of the network-capable infrastructure device (2), and
the network-capable infrastructure device (2) is configured to receive the key information in a commissioning process of the network-capable infrastructure device (2).

## Patentansprüche

1. Netzwerkfähige Infrastrukturvorrichtung (2), einschließend
eine erste Kommunikationseinheit (3), die konfiguriert ist, um mit mindestens einer anderen Infrastrukturvorrichtung (10) zu kommunizieren, und
eine zweite Kommunikationseinheit (4), die konfiguriert ist, um mit einer Inbetriebnahmevorrichtung (5) zu kommunizieren, und
wobei die netzwerkfähige Infrastrukturvorrichtung (2) konfiguriert ist, um Schlüsselinformationen von der zweiten Kommunikationseinheit (4) zu empfangen und mit der mindestens einen anderen Infrastrukturvorrichtung (10) über die erste Kommunikationseinheit (3) unter Verwendung der empfangenen Schlüsselinformationen zu kommunizieren, wobei
die erste Kommunikationseinheit (3) konfiguriert ist, um über eine drahtlose Kommunikationsschnittstelle zu kommunizieren,
die konfiguriert ist, um basierend auf mindestens einem Kommunikationsstandard zu arbeiten, der für ein Hausautomatisierungsnetzwerk wie Bluetooth, Bluetooth LE, Bluetooth Smart, ZigBee, xAP, DSI, DALI geeignet ist; **dadurch gekennzeichnet, dass** die zweite Kommunikationseinheit (4) konfiguriert ist, um durch akustische Kommunikation zu kommunizieren.

2. Netzwerkfähige Infrastrukturvorrichtung nach Anspruch 1, wobei die netzwerkfähige Infrastruktur (2) eine Vorschaltvorrichtung zum Ansteuern einer Beleuchtungseinheit (17) ist.

3. Netzwerkfähige Infrastrukturvorrichtung nach einem der Ansprüche 1 oder 2, wobei die Schlüsselinformationen ein privater Schlüssel der netzwerkfähigen Infrastrukturvorrichtung (2) sind und die netzwerkfähige Infrastrukturvorrichtung (2) konfiguriert ist, um die Schlüsselinformationen in einem Inbetriebnahmeprozess der netzwerkfähigen Infrastrukturvorrichtung (2, 10) zu empfangen.

4. Verfahren zum Inbetriebnehmen eines sicheren Beleuchtungsnetzwerks (1) mindestens einer netzwerkfähigen Infrastrukturvorrichtung (2), die eine erste (3) und eine zweite Kommunikationseinheit (4) umfasst, wobei das Verfahren die Schritte umfasst:
eine Inbetriebnahmevorrichtung (5), die über eine Inbetriebnahmekommunikationseinheit (6) Schlüsselinformationen an die mindestens eine netzwerkfähige Infrastrukturvorrichtung (2) überträgt (S5.1), und
die mindestens eine netzwerkfähige Infrastrukturvorrichtung (2), die die Schlüsselinformationen durch die zweite Kommunikationseinheit (4) empfängt (S5.2), und
die mindestens eine netzwerkfähige Infrastrukturvorrichtung (2), die über die erste Kommunikationseinheit (3) mit mindestens einer anderen Infrastrukturvorrichtung (10) unter Verwendung der empfangenen Schlüsselinformationen kommuniziert (S5.3), wobei
die erste Kommunikationseinheit (3) über eine drahtlose Kommunikationsschnittstelle kommuniziert, die konfiguriert ist, um basierend auf mindestens einem Kommunikationsstandard zu arbeiten, der für ein Hausautomatisierungsnetzwerk wie Bluetooth, Bluetooth LE, Bluetooth Smart, ZigBee, xAP, DSI, DALI geeignet ist; **dadurch gekennzeichnet, dass** die zweite Kommunikationseinheit (4) durch akustische Kommunikation kommuniziert.

5. Verfahren nach Anspruch 4, wobei
die Schlüsselinformationen ein privater Schlüssel der netzwerkfähigen Infrastrukturvorrichtung (2) sind.

6. System, das eine netzwerkfähige Infrastrukturvorrichtung (2) nach einem der Ansprüche 1 bis 3 und eine Inbetriebnahmevorrichtung (5) zum Inbetriebnehmen der netzwerkfähigen Infrastrukturvorrichtung (2) umfasst, wobei die Inbetriebnahmevorrichtung (5) einschließt:
eine Inbetriebnahmekommunikationseinheit (6), die konfiguriert ist, um mit einer zweiten Kommunikationseinheit (4) der Infrastrukturvorrichtung (2) zu kommunizieren,
eine Anzeigeeinheit (7), die konfiguriert ist, um ein Symbol anzuzeigen, das die netzwerkfähige Infrastrukturvorrichtung (2) darstellt, und
eine Eingabeeinheit (8), die konfiguriert ist, um eine Eingabeoperation zum Auswählen der angezeigten netzwerkfähigen Infrastrukturvorrichtung (2) anzunehmen, und
wobei die Inbetriebnahmevorrichtung konfiguriert ist, um einen Befehl an die netzwerkfähige Infrastrukturvorrichtung (2) zu übertragen, wenn sie die Eingabeoperation annimmt, wobei der Befehl die netzwerkfähige Infrastrukturvorrichtung (2) anweist, ein akustisches Signal zu emittieren, und
automatisch Schlüsselinformationen an die netzwerkfähige Infrastrukturvorrichtung (2) zu übertragen, wenn die Eingabeeinheit (8) eine jeweilige Eingabeoperation empfängt, wobei
die Inbetriebnahmekommunikationseinheit (6) konfiguriert ist, um mit der zweiten Kommunikationseinheit (4) durch akustische Kommunikation zu kommunizieren.

7. System nach Anspruch 6, wobei die Inbetriebnahmevorrichtung (5) eine mobile Vorrichtung oder eine Inbetriebnahmeanwendung ist, die auf einer mobilen Rechenvorrichtung läuft.

8. Verfahren zum Inbetriebnehmen mindestens einer netzwerkfähigen Infrastrukturvorrichtung (2) unter Verwendung einer
Inbetriebnahmevorrichtung (5), wobei das Verfahren die Schritte umfasst:
Anzeigen eines Symbols, das die mindestens eine netzwerkfähige Infrastrukturvorrichtung (2) darstellt, auf einer Anzeigeeinheit (7) der Inbetriebnahmevorrichtung (5) (S1),
Auswählen der angezeigten netzwerkfähigen Infrastrukturvorrichtung (2) (S2),
automatisches Übertragen, durch eine Inbetriebnahmekommunikationseinheit (6) der Inbetriebnahmevorrichtung (5), als Reaktion auf die Auswahloperation eines Befehls an die mindestens eine netzwerkfähige Infrastrukturvorrichtung (2), sich bei Empfangen einer ersten Eingabe akustisch zu identifizieren (S3),
wobei die Inbetriebnahmekommunikationseinheit (6) Schlüsselinformationen an die ausgewählte netzwerkfähige Infrastrukturvorrichtung (2) überträgt, wenn eine jeweilige Eingabeoperation empfangen wird (S5), wobei
die mindestens eine netzwerkfähige Infrastrukturvorrichtung (2) eine erste Kommunikationseinheit (3) zum Kommunizieren mit mindestens einer anderen Infrastrukturvorrichtung (10) und eine zweite Kommunikationseinheit (4) umfasst;
die Inbetriebnahmekommunikationseinheit (6) konfiguriert ist, um mit der zweiten Kommunikationseinheit (4) zu kommunizieren;
wobei die mindestens eine netzwerkfähige Infrastrukturvorrichtung (2) konfiguriert ist, um die Schlüsselinformationen über die zweite Kommunikationseinheit (4) zu empfangen und unter Verwendung der empfangenen Schlüsselinformationen über die erste Kommunikationseinheit (3) mit der anderen Infrastrukturvorrichtung (10) zu kommunizieren, wobei
die erste Kommunikationseinheit (3) konfiguriert ist, um durch eine drahtlose Kommunikationsschnittstelle zu kommunizieren, die für ein Hausautomatisierungsnetzwerk geeignet ist, das konfiguriert ist, um basierend auf mindestens einem Kommunikationsstandard zu arbeiten, der für ein Hausautomatisierungsnetzwerk geeignet ist, wie Bluetooth, Bluetooth LE, Bluetooth Smart, ZigBee, xAP, DSI, DALI; und
die zweite Kommunikationseinheit (4) konfiguriert ist, um durch akustische Kommunikation zu kommunizieren.

9. Verfahren nach Anspruch 8, wobei
die Anzeigeeinheit (7) das angezeigte Symbol als eine vertrauenswürdige netzwerkfähige Infrastrukturvorrichtung (2) anzeigt, wenn die Schlüsselinformationen erfolgreich an die ausgewählte netzwerkfähige Infrastrukturvorrichtung (2) übertragen werden (S6).

10. Verfahren nach Anspruch 8, wobei
die erste Kommunikationseinheit (3) konfiguriert ist, um den Befehl zu empfangen.

11. Verfahren nach Anspruch 8, wobei
die Schlüsselinformationen ein privater Schlüssel der netzwerkfähigen Infrastrukturvorrichtung (2) sind, und
die netzwerkfähige Infrastrukturvorrichtung (2) konfiguriert ist, um die Schlüsselinformationen in einem Inbetriebnahmeprozess der netzwerkfähigen Infrastrukturvorrichtung (2) zu empfangen.

## Revendications

1. Dispositif d'infrastructure à capacité réseau (2), incluant
une première unité de communication (3) configurée pour communiquer avec au moins un autre dispositif d'infrastructure (10), et
une deuxième unité de communication (4) configurée pour communiquer avec un dispositif de mise en service (5), et
dans lequel le dispositif d'infrastructure à capacité réseau (2) est configuré pour recevoir une information de clé par la deuxième unité de communication (4), et pour communiquer avec l'au moins un autre dispositif d'infrastructure (10) via la première unité de communication (3) en utilisant l'information de clé reçue, dans lequel
la première unité de communication (3) est configurée pour communiquer par une interface de communication sans fil,
qui est configurée pour fonctionner sur la base d'au moins une norme de communication standard appropriée pour un réseau domotique telle que Bluetooth, Bluetooth LE, Bluetooth Smart, ZigBee, xAP, DSI, DALI ; **caractérisé en ce que** la deuxième unité de communication (4) est configurée pour communiquer par communication acoustique.

2. Dispositif d'infrastructure à capacité réseau selon la revendication 1, dans lequel l'infrastructure à capacité réseau (2) est un dispositif de ballast pour piloter une unité d'éclairage (17).

3. Dispositif d'infrastructure à capacité réseau selon l'une quelconque des revendications 1 ou 2, dans lequel l'information de clé est une clé privée du dispositif d'infrastructure à capacité réseau (2), et le dispositif d'infrastructure à capacité réseau (2) est configuré pour recevoir l'information de clé dans un processus de mise en service du dispositif d'infrastructure à capacité réseau (2, 10).

4. Procédé de mise en service d'un réseau sécurisé d'éclairage (1) d'au moins un dispositif d'infrastructure à capacité réseau (2) comprenant une première (3) et une deuxième unité de communication (4), le procédé comprenant les étapes suivantes
un dispositif de mise en service (5) transmettant via une unité de communication de mise en service (6) une information de clé à l'au moins un dispositif d'infrastructure à capacité réseau (2)(S5.1), et
l'au moins un dispositif d'infrastructure à capacité réseau (2) recevant par la deuxième unité de communication (4) l'information de clé (S5.2), et
l'au moins un dispositif d'infrastructure à capacité réseau (2) communiquant via la première unité de communication (3) avec au moins un autre dispositif d'infrastructure (10) en utilisant l'information de clé reçue (S5.3), dans lequel
la première unité de communication (3) communique par une interface de communication sans fil, qui est configurée pour fonctionner sur la base d'au moins une norme de communication appropriée pour un réseau domotique telle que Bluetooth, Bluetooth LE, Bluetooth Smart, ZigBee, xAP, DSI, DALI ; **caractérisé en ce que** la deuxième unité de communication (4) communique par communication acoustique.

5. Procédé selon la revendication 4, dans lequel
l'information de clé est une clé privée du dispositif d'infrastructure à capacité réseau (2).

6. Système comprenant un dispositif d'infrastructure à capacité réseau (2) selon l'une quelconque des revendications 1 à 3 et un dispositif de mise en service (5) pour la mise en service dudit dispositif d'infrastructure à capacité réseau (2), le dispositif de mise en service (5) incluant
une unité de communication de mise en service (6) configurée pour communiquer avec une deuxième unité de communication (4) du dispositif d'infrastructure (2),
une unité d'affichage (7) configurée pour afficher une icône représentant le dispositif d'infrastructure à capacité réseau (2), et
une unité de saisie (8) configurée pour accepter une opération de saisie pour sélectionner le dispositif d'infrastructure à capacité réseau affiché (2), et
dans lequel le dispositif de mise en service est configuré pour transmettre une commande au dispositif d'infrastructure à capacité réseau (2) lors de l'acceptation de l'opération de saisie, dans lequel la commande donne pour instruction au dispositif d'infrastructure à capacité réseau (2) d'émettre un signal acoustique, et
de transmettre une information de clé automatiquement au dispositif d'infrastructure à capacité réseau (2) lorsque l'unité de saisie (8) reçoit une opération de saisie respective, dans lequel
l'unité de communication de mise en service (6) est configurée pour communiquer avec la deuxième unité de communication (4) par communication acoustique.

7. Système selon la revendication 6, dans lequel le dispositif de mise en service (5) est un dispositif mobile ou une application de mise en service s'exécutant sur un dispositif informatique mobile.

8. Procédé de mise en service d'au moins un dispositif d'infrastructure à capacité réseau (2) en utilisant un dispositif de mise en service (5), le procédé comprenant les étapes consistant à
afficher une icône représentant l'au moins un dispositif d'infrastructure à capacité réseau (2) sur une unité d'affichage (7) du dispositif de mise en service (5)(S1),
sélectionner le dispositif d'infrastructure à capacité réseau affiché (2)(S2),
transmettre par une unité de communication de mise en service (6) du dispositif de mise en service (5) automatiquement en réponse à l'opération de sélection une commande à l'au moins un dispositif d'infrastructure à capacité réseau (2) pour qu'il s'identifie acoustiquement lors de la réception d'une première saisie (S3),
l'unité de communication de mise en service (6) transmettant une information de clé au dispositif d'infrastructure à capacité réseau sélectionné (2) lors de la réception d'une opération de saisie respective (S5), dans lequel
l'au moins un dispositif d'infrastructure à capacité réseau (2) inclut une première unité de communication (3) pour communiquer avec au moins un autre dispositif d'infrastructure (10) et une deuxième unité de communication (4) ;
l'unité de communication de mise en service (6) est configurée pour communiquer avec la deuxième unité de communication (4) ;
dans lequel l'au moins un dispositif d'infrastructure à capacité réseau (2) est configuré pour recevoir l'information de clé via la deuxième unité de communication (4), et pour communiquer via la première unité de communication (3) avec l'autre dispositif d'infrastructure (10) en utilisant l'information de clé reçue, dans lequel
la première unité de communication (3) est configurée pour communiquer par une interface de communication sans fil appropriée pour un réseau domotique, qui est configurée pour fonctionner sur la base d'au moins une norme de communication appropriée pour un réseau domotique telle que Bluetooth, Bluetooth LE, Bluetooth Smart, ZigBee, xAP, DSI, DALI ; et
la deuxième unité de communication (4) est configurée pour communiquer par communication acoustique.

9. Procédé selon la revendication 8, dans lequel
l'unité d'affichage (7) indique l'icône affichée comme un dispositif d'infrastructure à capacité réseau de confiance (2) lors de la transmission réussie de l'information de clé au dispositif d'infrastructure à capacité réseau sélectionné (2)(S6).

10. Procédé selon la revendication 8, dans lequel
la première unité de communication (3) est configurée pour recevoir la commande.

11. Procédé selon la revendication 8, dans lequel
l'information de clé est une clé privée du dispositif d'infrastructure à capacité réseau (2), et
le dispositif d'infrastructure à capacité réseau (2) est configuré pour recevoir l'information de clé dans un processus de mise en service du dispositif d'infrastructure à capacité réseau (2).
